# EUROPEAN PATENT SPECIFICATION

(11) **EP 3 445 818 B1**
(45) Date of publication and mention of the grant of the patent: **09.09.2020**
(21) Application number: 17722924.2
(22) Date of filing: 19.04.2017
(51) Int. Cl.: C08L 27/06

(54) **ORIENTED THERMOPLASTIC POLYMER COMPOSITION COMPRISING POLYVINYL CHLORIDE FORMULATION AND AN ACRYLIC COPOLYMER AS PROCESS AID**
AUSGERICHTETE THERMOPLASTISCHE POLYMERZUSAMMENSETZUNG MIT EINER POLYVINYLCHLORIDFORMULIERUNG UND EINEM ACRYLPOLYMER ALS PROZESSHILFSMITTEL
COMPOSITION DE POLYMÈRE THERMOPLASTIQUE ORIENTÉ COMPRENANT UNE FORMULATION DE POLY(CHLORURE DE VINYLE) ET UN COPOLYMÈRE ACRYLIQUE EN TANT QU'AIDE AU TRAITEMENT

(30) Priority: 20.04.2016 US 201662325036 P; 05.01.2017 US 201762442518 P
(43) Date of publication of application: 27.02.2019
(73) Proprietor: Rohm and Haas Company, Collegeville, PA 19426 (US)
(72) Inventor: PETR, Michael T., Collegeville PA 19426 (US)
(74) Representative: Houghton, Mark Phillip
(86) International application number: PCT/US2017/028336
(87) International publication number: WO 2017/184711

(56) References cited:
- WO-A1-2011/045991
- JP-A- 2015 089 895
- US-A- 4 692 295
- US-A- 4 797 426

## Description

### FIELD OF THE INVENTION

This invention relates generally to acrylic polymers that are useful in oriented polyvinyl chloride compositions. The acrylic polymers contain polymerized units derived from methyl methacrylate and C₂-C₆ alkyl (meth)acrylate monomers, and have a M*_{w}*/GPC-PS of 4 x 10⁶ g/mol or greater.

### BACKGROUND

Oriented polyvinyl chloride ("o-PVC") pipes offer significant improvements over regular polyvinyl chloride ("PVC") pipes by maintaining burst and impact strength of the pipe while reducing its weight. To produce the o-PVC pipe, a regular pipe is extruded at half the desired final diameter and then stretched in the hoop direction to, for example, twice the original diameter. In doing so, the thickness of the pipe wall is also reduced by half, and the PVC chains align and orient, which increases the strength of the PVC material. Therefore, given a desired pipe diameter, an o-PVC pipe is half the weight and requires half the raw material of a regular PVC pipe, yet it maintains the same or better strength.

Despite its huge improvement over regular PVC, o-PVC has encountered obstacles due to the economics of the process. Typically, o-PVC is made in a semi-batch process, whereby the pipe is extruded, cut into sections, heated to 100°C, and pressurized to expand. The labor and equipment required in such a process greatly increases the cost of o-PVC pipe. Alternatively, a continuous process can be utilized, whereby the extruded pipe is cooled to 100°C and stretched over a mandrel. Though less expensive, the continuous process can only run at one third the rate of the extrusion process, which is limited by breaking of the PVC melt during stretching before achieving the full strain necessary to double the pipe diameter.

Process aids have been utilized in the art. For example, U.S. Patent No. 4,692,295 discloses certain PVC process aids containing a homopolymer of a vinyl monomer or a copolymer of at least two vinyl monomers for achieving orientation in a thermoplastic resin. U.S. Patent No. 6,391,976 discloses a PVC foam process aid containing methyl methacrylate and C₃-C₅ methacrylic esters. The prior art does not, however, disclose a process aid according to the present invention, which achieves increased melt strength enabling a greater run rate for the continuous stretching of the pipe compound without leading to breakage of the PVC compound prior to achieving full strain. JP2015/089895 discloses a medical vinyl chloride resin composition which comprises: 100 pts.mass of component (a) a vinyl chloride resin; 1 to 20 pts.mass of component (b) a cyclohexane dicarboxylate-based plasticizer; 0.5 to 30 pts.mass of one or more selected from the group consisting of component (c) a methyl methacrylate-alkyl acrylate copolymer, a methyl methacrylate-alkyl acrylate-styrene copolymer and a methyl methacrylate-alkyl acrylate-glycidyl (meth)acrylate copolymer. US4797426 discloses a hard polyvinyl chloride resin composition comprising (a) a polyvinyl chloride base resin produced by suspension polymerization and/or bulk polymerization; (b) a super high molecular acrylic resin base processing aid; (c) a stabilizer containing one or more Group-II and/or Group-IV metals; (d) a surfactant; and (e) a heat-decomposable organic foaming agent. WO2011/045991 discloses an optical film comprising an acrylic resin (A) having a weight-average molecular weight Mw that is 70,000 or greater, but less than 1,000,000; an acrylic resin (B) having a weight-average molecular weight between 1,000,000 and 10,000,000; and a cellulose ester resin (C).

Accordingly, there is a need to develop o-PVC process aids that do not suffer from the drawbacks of the prior art, namely, o-PVC process aids that provide significant improvements in melt strength while allowing for an increased run rate in the continuous stretching of PVC pipe.

### STATEMENT OF INVENTION

One aspect of the invention provides an oriented thermoplastic polymer composition comprising (a) a polyvinyl chloride formulation, and (b) an acrylic copolymer comprising polymerized units derived from (i) 50 to 95 weight % of methyl methacrylate monomers, and (ii) 5 to 50 weight % of C₂-C₆ alkyl (meth)acrylate monomers, based on the total weight of monomers in the acrylic copolymer, wherein the acrylic copolymer is present in the thermoplastic composition in an amount of from 8 to 20 weight %, based on the total weight of the thermoplastic composition, and has a M*_{w}*/GPC-PS of 4 x 10⁶ g/mol or more, wherein M*_{w}*/GPC-PS refers to the weight average molecular weight as measured against polystyrene calibration standards via gel permeation chromatography with a refractive index detector following ASTM D5296-11 (2011), and using tetrahydrofuran as the mobile phase and diluent. In certain embodiments, the polyvinyl chloride formulation comprises a polyvinyl chloride and a component selected from the group consisting of internal lubricants, external lubricants, stabilizers, inorganic fillers, and combinations thereof.

In another embodiment, the acrylic copolymer comprises polymerized units derived from (i) 55 to 85 weight % of methyl methacrylate monomers, and (ii) 15 to 45 weight % of C₂-C₆ alkyl (meth)acrylate monomers, based on the total weight of the monomers in the acrylic copolymer.

In a further embodiment, the acrylic copolymer comprises polymerized units derived from (i) 60 to 82 weight % of methyl methacrylate monomers, and (ii) 18 to 40 weight % of one or more monomers preferably selected from the group consisting of butyl acrylate, butyl methacrylate, ethyl acrylate, and mixtures thereof, based on the total weight of monomers in the acrylic copolymer. The acrylic copolymer has preferably a M*_{w}*/GPC-PS of 5 x 10⁶ to 8 x 10⁶ g/mol. Another aspect of the present invention provides an article of manufacture comprising the oriented thermoplastic polymer composition of the invention In certain embodiments, the article of manufacture is a pipe.

In a particular aspect, the present invention provides an article of manufacture comprising an oriented thermoplastic polymer composition comprising (a) a polyvinyl chloride formulation, and (b) an acrylic copolymer comprising polymerized units derived from (i) 60 to 82 weight % of methyl methacrylate monomers, and (ii) 18 to 40 weight % of one or more monomers selected from the group consisting of butyl acrylate, butyl methacrylate, ethyl acrylate, and mixtures thereof C₂-C₆ alkyl (meth)acrylate monomers, based on the total weight of monomers in the acrylic copolymer, wherein the acrylic copolymer is present in the thermoplastic composition in an amount of from 8 to 20 weight %, based on the total weight of the thermoplastic composition, and has a M*_{w}*/GPC-PS of 5 x 10⁶ to 8 x 10⁶ g/mol.
In certain embodiments, the polyvinyl chloride formulation comprises a polyvinyl chloride and a component selected from the group consisting of internal lubricants, external lubricants, stabilizers, inorganic fillers, and combinations thereof.

### DETAILED DESCRIPTION

The inventors have now surprisingly found that oriented thermoplastic polymer compositions comprising a polyvinyl chloride and an acrylic copolymer comprising polymerized units derived from methyl methacrylate and C₂-C₆ alkyl (meth)acrylate monomers having a M*_{w}*/GPC-PS of 4 x 10⁶ g/mol or more provide significant improvements in melt strength allowing for an increased run rate in the continuous stretching of PVC compounds without leading to premature breakage.

As used herein, the term "polymer" refers to a polymeric compound prepared by polymerizing monomers, whether of the same or a different type. The generic term "polymer" includes the terms "homopolymer," "copolymer," "terpolymer," and "resin." As used herein, the term "polymerized units derived from" refers to polymer molecules that are synthesized according to polymerization techniques wherein a product polymer contains "polymerized units derived from" the constituent monomers which are the starting materials for the polymerization reactions. As used herein, the term "(meth)acrylate" refers to either acrylate or methacrylate or combinations thereof, and the term "(meth)acrylic" refers to either acrylic or methacrylic or combinations thereof. As used herein, the term "substituted" refers to having at least one attached chemical group, for example, alkyl group, alkenyl group, vinyl group, hydroxyl group, carboxylic acid group, other functional groups, and combinations thereof.

As used herein, the term "phr" means per hundred parts resin or polymer solids, and, unless otherwise indicated, refers to the polyvinyl chloride.

As used herein, the term "weight average molecular weight" or "M*_{w}*" refers to the weight average molecular weight of a polymer as measured by gel permeation chromatography ("GPC"), for acrylic polymers. As used herein, the term "M*_{w}*/GPC-PS" refers to the M*_{w}* as measured against polystyrene calibration standards via GPC with a refractive index detector following ASTM D5296-11 (2011), and using tetrahydrofuran ("THF") as the mobile phase and diluent. As used herein, the term "M*_{w}*/GPC-MALS" refers to the M*_{w}* as measured via GPC with multi-angle light scattering detection.

The inventive oriented thermoplastic polymer compositions comprise a polyvinyl chloride formulation and an acrylic copolymer. In certain embodiments, the polyvinyl chloride formulation comprises a polyvinyl chloride and one or more of internal lubricants, external lubricants, stabilizers, and inorganic fillers. The polyvinyl chloride formulation is present in an amount of at least 80 weight %, preferably at least 88 weight %, and up to 92 weight %, based on the total weight of the thermoplastic composition. The acrylic copolymer is present in the thermoplastic composition in an amount of from 8 to 20 weight %, preferably of from 8 to 12 weight %, based on the total weight of the thermoplastic composition.

The polyvinyl chloride of the inventive composition has a degree of polymerization of from 600 to 1,500 and a weight average molecular weight in the range of from 40,000 to 90,000 g/mol, and can be obtained by conventional suspension polymerization, emulsion polymerization, bulk polymerization, or solution polymerization in the presence of initiators. In certain embodiments, the polyvinyl chloride is present in the thermoplastic composition in an amount of from 74 to 90 weight %, preferably of from 80 to 89 weight %, and more preferably of from 84 to 87 weight %, based on the total weight of the thermoplastic composition.

Suitable examples of internal lubricants, include, for example, small molecule esters or oxidized polyethylene. In certain embodiments, the internal lubricants are present in the thermoplastic composition in an amount of from 0.1 to 5 weight %, preferably of from 0.1 to 1 weight %, and more preferably of from 0.2 to 0.5 weight %, based on the total weight of the thermoplastic composition. Suitable examples of external lubricants, include, for example, salts of fatty acids, such as calcium stearate, waxes, and polymeric lubricants. In certain embodiments, the external lubricants are present in the thermoplastic composition in an amount of from 0.1 to 10 weight %, preferably of from 0.2 to 5 weight %, and more preferably of from 0.5 to 1.5 weight %, based on the total weight of the thermoplastic composition. Suitable example of stabilizers, include, for example, organometallic or metallic compounds, such as methyl tin mercaptides, metal carboxylates, such as calcium stearate, calcium acetoacetonate, zinc acetonacetonate, and heavy metal salts, such as lead carbonate or lead sulfate. In certain embodiments, the stabilizers are present in the thermoplastic composition in an amount of from 0.1 to 10 weight %, preferably of from 0.3 to 5 weight %, and more preferably of from 0.5 to 1.5 weight %, based on the total weight of the thermoplastic composition. Suitable examples of inorganic fillers, include, for example, calcium carbonate, calcium sulfate, titanium dioxide, silica, talc, kaolinite, and other silicates. In certain embodiments, the inorganic fillers are present in the thermoplastic composition in an amount of from 0.1 to 50 weight %, preferably of from 1 to 25 weight %, and more preferably of from 4 to 8 weight %, based on the total weight of the thermoplastic composition.

The acrylic copolymer of the inventive composition comprises polymerized units derived from methyl methacrylate and C₂-C₆ alkyl (meth)acrylate monomers. In certain embodiments, the methyl methacrylate monomers are present in the acrylic copolymer in an amount of from 50 to 95 weight %, preferably of from 55 to 85 weight %, and more preferably of from 60 to 82 weight %, based on the total weight of the acrylic copolymer. In certain embodiments, the C₂-C₆ alkyl(meth)acrylate monomers are present in the acrylic copolymer in an amount of from 5 to 50 weight %, preferably of from 15 to 45 weight %, and more preferably of from 18 to 40 weight %, based on the total weight of the acrylic copolymer. Suitable C₂-C₆ alkyl (meth)acrylate monomers include, for example, ethyl (meth)acrylate, propyl (meth)acrylate, butyl(meth)acrylate, pentyl (meth)acrylate, and hexyl (meth)acrylate. In certain preferred embodiments, the C₂-C₆ alkyl (meth)acrylate monomers comprise one or more of butyl acrylate, butyl methacrylate, ethyl acrylate.

In certain embodiments, the acrylic copolymer further comprises one or more co-monomers other than methyl methacrylate and C₂-C₆ acrylate (meth)acrylate monomers. Suitable co-monomers include, for example, C₇-C₁₈ alkyl (meth)acrylates, C₁-C₁₈ alkyl (meth)acrylamides, dienes (e.g., butadiene), isoprene, (meth)acrylic acid, substituted C₁-C₁₈ alkyl (meth)acrylates (e.g., hydroxyethyl (meth)acrylate), styrene, substituted styrenes (e.g., alpha methyl styrene), vinyl alcohols, vinyl ethers, vinyl esters (e.g., vinyl acetate), vinyl halides (e.g., vinyl chloride), and vinyl nitriles (e.g., acrylonitrile). In certain embodiments, the co-monomers are present in an amount of no more than 15 weight %, or no more than 10 weight %, or no more than 5 weight %, based on the total weight of monomers.

The acrylic copolymers described herein provide improved properties to the inventive oriented thermoplastic polymer compositions including, for example, providing an increased melt strength while allowing for an increased run rate in the continuous stretching of PVC compounds without leading to premature breakage. Melt strength is proportional to the molecular weight of a process aid. *See, e.g.,* J.P. Disson and S. Girois, J. Vinyl & Additive Tech., 9, No. 4, 177-185 (2003). In certain embodiments, the acrylic copolymers of the present invention have a M*_{w}*/GPC-PS of 4 x 10⁶ g/mol or more, or 5 x 10⁶ g/mol or more, or 6 x 10⁶ g/mol or more, or 7 x 10⁶ g/mol or more. In certain embodiments, the acrylic copolymers of the present invention have a M*_{w}*/GPC-PS of 4 x 10⁷ g/mol or less, or 2 x 10⁷ g/mol or less, or 1 x 10⁷ g/mol or less, or 8 x 10⁶ g/mol or less.

In general, the acrylic copolymers are formed by aqueous emulsion or suspension polymerization in the presence of an initiator, such as a thermal initiator like a peracid, e.g., persulfate, or a peroxide, or a redox pair, such as a peracid or peroxide and a reducing agent like a bisulfite or an organic sulfoxylate. Such polymerization methods are conventional in the art such as, for example, U.S. Patent Nos. 4,325,856, 4,654,397, and 4,814,373. In emulsion or suspension polymerization, monomer mixture(s) may be added neat or as an emulsion in water. In suspension polymerization, no surfactant or emulsifier is used. Such monomer mixtures may be added as a shot or fed, as in gradual addition polymerization. A monomer mixture may be added in one or more additions and may be added continuously over all or part the reaction period or not continuously, such as over all or part of the reaction period. One or more monomer mixture can be added linearly, such as in the case of gradual addition (grad add), or not, such as, for example, in semi-continuous polymerization or addition all at once as a "shot", or in any combination thereof.

In emulsion polymerization, conventional surfactants may be used such as, for example, anionic and/or nonionic emulsifiers such as, for example, alkali metal or ammonium salts of alkyl, aryl, or alkylaryl sulfates, sulfonates or phosphates; alkyl sulfonic acids, sulfosuccinate salts; fatty acids; ethylenically unsaturated surfactant monomers; and ethoxylated alcohols or phenols. The amount of surfactant used is usually 0.1% to 6% by weight, based on the weight of monomer, or higher to make a higher M*_{w}* polymer. The same surfactants and amounts thereof are used in both single stage and in multi-stage emulsion polymerization processes. Either thermal or redox initiation processes may be used in either single stage or multi-stage emulsion polymerization processes. Known free radical initiators such as, for example, peroxides, ammonium and/or alkali persulfates or redox pairs, may be used at a level of from 0.01 to 3.0 weight %, based on the weight of total monomer, or lower to make a higher M*_{w}* polymer stage. Redox systems using the same initiators may be coupled with a suitable reductant such as, for example, (iso)ascorbic acid, alkali metal and ammonium salts of sulfur-containing acids, such as sodium sulfite, bisulfite, formadinesulfinic acid, hydroxymethanesulfonic acid, sodium sulfoxylate formaldehyde, 2-hydroxy-2-sulfinatoacetic acid, 2-hydroxy-2-sulfonatoacetic acid, amines such as ethanolamine, glycolic acid, glyoxylic acid hydrate, lactic acid, glyceric acid, malic acid, tartaric acid and salts of the preceding acids.

To make higher M*_{w}* polymers or polymer stages, one or more monomer mixtures should be added as a "shot" to the reactor or initially charged in the reactor at the beginning of one or more reaction stage. Preferably, to make a high M*_{w}* polymer stage, one can start the polymerization reaction cold or at room temperature, use a compatible seed polymer, lower the concentration of initiator, raise the concentration of surfactants or emulsifiers, use a redox pair as a radical initiator, or any combination thereof. More preferably, one starts the polymerization reaction cold or at room temperature and either uses shot polymerization and/or a redox initiator.

The acrylic copolymers are isolated by coagulation or spray drying to form a powder. Coagulation can be carried out by various coagulation methods known in the art, such as aqueous electrolyte (salt) coagulation using an aqueous solution of a salt of an inorganic acid, such as sodium chloride, magnesium acetate, calcium hypophosphite. Preferably, the electrolyte solution is prepared with a salt containing a divalent cation, such as calcium chloride (CaCl₂). Coagulation with a water soluble, or partially water soluble solvent, such as methanol and the like ("methanol-coagulation") is also possible. Suitable techniques for spray drying the polymer beads of the present invention are known in the art, for example, as described in US 2014/0113992 A1. In certain embodiments, anti-caking agents are used when spray drying the acrylic copolymers. Suitable anti-caking agents include, for example, mineral fillers (e.g., calcium carbonate, kaolin, titanium oxide, talc, hydrated alumina, bentonite, and silica), solid polymer particles with a *T_{g}* or *T*ₘ greater than 60°C (e.g., polymethylmethacrylate, polystyrene, and high density polyethylene), and water soluble polymers with a *T*_{g} greater than 60°C (e.g., polyvinyl alcohol and methylcellulose). The anti-caking agent can be mixed in the acrylic suspension prior to spray drying or introduced as a dry powder in the spray drying process. In certain embodiments, anti-dust agents are used when spray drying the acrylic copolymers. Suitable anti-dust agents include, for example, low glass transition temperature polymers, such as poly(ethyl acrylate), poly(butyl acrylate), or copolymers thereof, waxes, and surfactants.

Another variation of the present invention includes adding one or more other known acrylic copolymer compositions, in either powder or aqueous slurry form. These additives can be blended using standard equipment such as high-speed mixers, blenders, kneaders, extruders, fluidized drying beds, spray nozzles, and the like as mixing equipment.

Other ingredients typically blended in oriented thermoplastic formulations, such as lubricants, thermal stabilizers, waxes, dyes, pigments, fillers, and the like, may each have an aqueous solution, liquid, powdered, or pellet form, and may be included in the present invention using this mixing equipment. The amount of optional ingredients effective for achieving the desired property provided by such ingredients can be readily determined by one skilled in the art.

The polymeric additive powders of the present invention may be used in various ways, including preparation of thermoplastic polymer compositions. The thermoplastic polymer compositions of the present invention contain polyvinyl chloride and the polymeric additive powder of the present invention. These blends are readily prepared by melt-blending methods that are known in the art of plastics processing. For example, the polymeric additive powders of the present invention can be blended with vinyl chloride polymer powders or pellets and melt processed using an extruder.

The acrylic copolymers of the present invention find use in processing of polyvinyl chloride. The thermoplastic polymer compositions of the present invention can also be blended with higher amounts of the polymeric additives powders of the present invention for preparing concentrated pellets of the polymeric additive powders of the present invention. The thermoplastic polymer compositions of the present invention may also be formed into pellets by the steps of blending, extruding and pelletizing using conventional plastics processing equipment.

The oriented thermoplastic polymer compositions of the present invention have many uses, including pipes and other extruded articles.

Some embodiments of the invention will now be described in detail in the following Examples.

### EXAMPLES

### Example 1

### Preparation of Exemplary and Comparative Copolymers

Exemplary acrylic copolymers in accordance with the present invention and comparative acrylic copolymers contain the components recited in Table 1.

**Table 1. Exemplary Acrylic Copolymers**

| **Sample** | **Monomer (wt %)** |
|---|---|
| P1 | 82 MMA / 18 BA |
| P2 | 60 MMA / 40 BMA |
| P3 | 82 MMA / 18 EA |

| | |
|---|---|
| MMA = methyl methacrylate BA = butyl acrylate BMA = butyl methacrylate EA = ethyl acrylate | |

Exemplary acrylic copolymers E1-E3 in accordance with the present invention were synthesized with appropriate changes in monomer amounts as recited in Table 1 as follows. Conventional aqueous emulsion polymerization was used to make them. An emulsion of monomers, a surfactant (DOWFAX 2A1, an alkyldiphenyloxide disulfonate surfactant which is commercially available from The Dow Chemical Company (Midland, MI, USA)), and water was mixed and added to a reaction flask. After inerting the contents, polymerization was initiated with a sodium formaldehyde sulfoxylate and sodium persulfate redox initiator system catalyzed by an iron salt. Upon completion of the polymerization, the latex was cooled and dried.

### Example 2

### Molecular Weight Characterization of Exemplary and Comparative Copolymers

Exemplary acrylic copolymer in accordance with the present invention as synthesized in Example 1, and a comparative copolymer, were evaluated for molecular weight as shown in Table 2.

**Table 2. Molecular Weight Characterization**

| **Sample** | **M*_{w}*/GPC-PS (10⁶ g/mol)** | **M*_{w}*/GPC-MALS (10⁶ g/mol)** |
|---|---|---|
| P1 | 6.14 | 14.9 |
| P2 | 5.21 | 18.6 |
| P3 | 7.45 | 10.6 |
| PARALOID K-120ND* (P(EA/MMA)) | 0.74 | 1.1 |

| | | |
|---|---|---|
| *Available from The Dow Chemical Company | | |

The M*_{w}*/GPC-PS (i.e., GPC against polystyrene calibration standards as described above) of Exemplary Polymers P1-P3 and the comparative copolymer was determined following ASTM D5296-11 (2011) on an Agilent 1100 Series High Pressure Liquid Chromatograph ("HPLC") with two 20 µm MIXED-A columns and a Wyatt T-rEX refractive index detector using tetrahydrofuran as the mobile phase and diluent at 0.2 mL/min and room temperature. GPC samples were prepared in THF at a concentration smaller or equal to 0.3 mg/mL. The GPC samples were dissolved at room temperature without vigorous shaking that induces shear degradation to the polymer. Upon complete dissolution, the GPC sample solution was filtered using Whatman™ 1 µm PTFE filter prior to the analysis.

The M*_{w}*/GPC-MALS (i.e., GPC with multi-angle light scattering detection as described above) of Exemplary Polymers P1-P3 was determined as follows. GPC samples were prepared in a 0.3 mg/mL tetrehydrofuran/formic acid (THF/FA, 100:5 v/v) solution, gently hand-shaken, and then stored overnight at room temperature for complete dissolution. All solutions were filtered through a 1 µm Teflon filter prior to the 100 µL injections. The instrument setup consisted of Shimadzu LC-20AD LC pump and SIL-20A HT autosampler, Wyatt HELEOS Multi-angle light scattering detector, rEX refractive index detector, and two shodex 807L columns using THF/FA as the mobile phase at a flow rate of 0.2 mL/min. The Wyatt HELEOS MALS was calibrated using high pressure liquid chromatography ("HPLC") grade toluene and its angular response was calibrated using a narrow 45 kg/mol narrow poly(ethylene oxide) ("PEO") standard. Data was recorded and processed using Wyatt ASTRA® v6.1 software, and weight average molecular weight (Mw) and radius of gyration (Rg or RMS) were determined at each GPC elution volume increment using Debye Plots with second order polynomial fit according to the Zimm formalism.

### Example 3

### Reduced Viscosity Characterization of Exemplary Copolymers

Exemplary acrylic copolymers in accordance with the present invention as synthesized in Example 1 were evaluated for reduced viscosity as shown in Table 3.

**Table 3. Reduced Viscosity Characterization**

| **Sample** | **Reduced Viscosity (dL/g)** |
|---|---|
| P1 | 14.2 |
| P2 | 23.0 |
| P3 | 18.9 |

The reduced viscosity was measured according to ASTM D2857-95 (2007) at 1 mg/mL in chloroform at 25°C using an I capillary tube with a 0.63 mm capillary size and a constant K of 0.01.

### Example 4

### Preparation of Exemplary and Comparative Oriented Polyvinyl Chloride Pipe Formulations

Exemplary polyvinyl chloride formulations in accordance with the present invention contain the components recited in Table 4, with the loading of each exemplary acrylic copolymers P1-P3 as indicated in Table 5.

**Table 4. Oriented Polyvinyl Chloride Formulation**

| **Material** | **Loading (phr)** |
|---|---|
| PVC F622¹ | 100.0 |
| ADVASTAB TM-696² (liquid methyl tin) | 0.85 |
| CaSt³ | 0.6 |
| Paraffin Wax⁴ | 1.4 |
| Oxidized PE Wax (AC 629A)⁵ | 0.3 |
| TiO₂⁶ | 0.6 |
| Calcium Carbonate (untreated)⁷ | 5.0 |
| Pigment (blue)⁸ | 0.1274 |
| PA551 (acrylic process aid)⁹ | 0.85 |
| Inventive Process Aid | X |
| **Total** | **109.7274 + X** |

| | |
|---|---|
| ¹Available from Formosa Industries, TW ²Available from The Dow Chemical Company ³Available from Ferro Corporation ⁴Available from Sasol Wax North America ⁵Available from Ferro Corporation ⁶Available from Ishihara Corporation ⁷Available from Columbia River Carbonates ⁸Available from Holland Colours Americas Inc. ⁹Available from Mitsubishi Rayon | |

**Table 5. Loading of Process Aid in Oriented Polyvinyl Chloride Formulations**

| **Example** | **P1 (phr)** | **P2 (phr)** | **P3 (phr)** | **PARALOID K-120ND (phr)** |
|---|---|---|---|---|
| E1_{ref} | 1 | -- | -- | -- |
| E2 _{ref} | 1.5 | -- | -- | -- |
| E3_{ref} | 2 | -- | -- | -- |
| E4_{ref} | 3 | -- | -- | -- |
| E5_{ref} | 4 | -- | -- | -- |
| E6_{ref} | 5 | -- | -- | -- |
| E7_{ref} | 7 | -- | -- | -- |
| E8 | 10 | -- | -- | -- |
| E9_{ref} | -- | 3 | -- | -- |
| E10_{ref} | -- | 5 | -- | -- |
| E11_{ref} | -- | -- | 3 | -- |
| E12_{ref} | -- | -- | 5 | -- |
| C1* | -- | -- | -- | -- |
| C2* | - | -- | -- | -- |
| C3* | -- | -- | -- | -- |
| C4* | -- | -- | -- | 1.5 |
| C5* | -- | -- | -- | 5 |
| C6* | -- | -- | -- | 10 |

| | | | | |
|---|---|---|---|---|
| *Comparative ref: reference examples, not according to invention | | | | |

The oriented polyvinyl chloride pipe formulations were prepared by adding the materials in Tables 4 and 5 sequentially. The components in Table 4 and respective amounts of exemplary acrylic copolymers P1-P3 and comparative process aid PARALOID K-120ND were added and shaken to mix. The powder was then milled on an electric Colin Roll Mill at 205°C with the front and back rollers at 20 rpm, respectively, for 4 minutes and then immediately pressed into a 1/8 inch thick plaque on a Reliable hydraulic press at 190°C and at 15 and 80 tons and then cooled for 4 minutes at 80 tons. Type V tensile bars were then cut from the plaques using a Leblond-Makino RMC55 CNC mill.

### Example 5

### Tensile Elongation Characterization of Exemplary and Comparative Oriented PVC Formulations at 100°C and 20 in/min Strain Rate

Exemplary and comparative PVC formulations as prepared in Example 4 were evaluated for tensile elongation at 100°C and a 20 in/min strain rate as shown in Table 6.

**Table 6. Elongation at Break at 100°C and 20 in/min**

| **Sample** | **Elongation at Break (%)** |
|---|---|
| E1_{ref} | 300.7 |
| E2_{ref} | 352.0 |
| E3_{ref} | 295.9 |
| E4_{ref} | 308.1 |
| E5 _{ref} | 329.8 |
| E6_{ref} | 485.5 |
| E7_{ref} | 371.1 |
| E8 | 421.1 |
| E9_{ref} | 328.4 |
| E10_{ref} | 390.6 |
| E11_{ref} | 322.2 |
| E12_{ref} | 347.4 |
| C1* | 305.2 |
| C2* | 282.5 |
| C3* | 259.2 |
| C4* | 359.8 |
| C5* | 403.8 |
| C6* | 312.0 |

| | |
|---|---|
| *Comparative ref: reference examples, not according to invention | |

To test the effect of the exemplary acrylic polymers P1-P3 on oriented PVC pipe formulations as compared against blank formulations C1-C3 (i.e., containing no additive) and comparative formulations C4-C6, tensile bars as prepared in Example 4 were evaluated for one dimensional tensile elongation at 100°C and a strain rate of 20 in/min until failure. Before testing, the samples were conditioned inside a 3119-406 Environment Chamber to ensure they reached the desired temperature of 100°C. After conditioning, the Type V tensile bars were strained using an Instron 8872 Servo-Hydraulic Testing System with 25kN Dynacell load cell following the Type V sample geometry in accordance with ASTM D638.

The results in Table 6 demonstrate that inventive examples E1-E12 containing acrylic copolymers in accordance with the present invention provide oriented PVC pipe formulations exhibiting far superior elongation at break values at a given loading, when compared to oriented PVC pipe formulations prepared from comparative copolymer additives.

### Example 6

### Tensile Elongation Characterization of Reference Examplary and Comparative Oriented PVC Formulations at 100°C and 50 in/min Strain Rate

Exemplary and comparative PVC formulations as prepared in Example 4 were evaluated for tensile elongation at 100°C and a 50 in/min strain rate as shown in Table 7.

**Table 7. Elongation at Break at 100°C and 50 in/min**

| **Sample** | **Elongation at Break (%)** |
|---|---|
| C1* | 192.3 |
| E6_{ref} | 425.2 |

| | |
|---|---|
| *Comparative ref: reference examples, not according to invention | |

To test the effect of the exemplary acrylic polymer P1 on oriented PVC pipe formulations as compared against blank formulation C1 (i.e., containing no additive), tensile bars as prepared in Example 4 were evaluated for one dimensional tensile elongation at 100°C and a strain rate of 50 in/min until failure. Before testing, the samples were conditioned inside a 3119-406 Environment Chamber to ensure they reached the desired temperature of 100°C. After conditioning, the Type V tensile bars were strained using an INstron 8872 Servo-Hydroaulic Testing System with 25kN Dynacell load cell following the Type V sample geometry in accordance with ASTM D638.

The results in Table 7 demonstrate that reference example E6 containing acrylic copolymer in accordance with the present invention provides an oriented PVC pipe formulation exhibiting break value at a given loading, even at a strain rate of 50 in/min.

### Example 7

### Tensile Elongation Characterization of Reference Examplary and Comparative Oriented PVC Formulations at 115°C and 20 in/min Strain Rate

Exemplary and comparative PVC formulations as prepared in Example 4 were evaluated for tensile elongation at 115°C and a 20 in/min strain rate as shown in Table 8.

**Table 8. Elongation at Break at 115°C and 20 in/min**

| **Sample** | **Elongation at Break (%)** |
|---|---|
| C1* | 143.8 |
| E6_{ref} | 429.9 |

| | |
|---|---|
| * Comparative ref: reference examples, not according to invention | |

To test the effect of the exemplary acrylic polymer P1 on oriented PVC pipe formulations as compared against blank formulation C1 (i.e., containing no additive), tensile bars as prepared in Example 4 were evaluated for one dimensional tensile elongation at 115°C and a strain rate of 20 in/min until failure. Before testing, the samples were conditioned inside a 3119-406 Environment Chamber to ensure they reached the desired temperature of 115°C. After conditioning, the Type V tensile bars were strained using an Instron 8872 Servo-Hydoaulic Testing System with 25kN Dynacell load cell following the Type V sample geometry in accordance with ASTM D638.

The results in Table 8 demonstrate that reference example E6 containing acrylic copolymer provides an oriented PVC pipe formulation exhibiting a significant increase in the elongation at break value at a given loading, even at a high temperature of 115°C.

## Claims

1. An oriented thermoplastic polymer composition comprising:
(a) a polyvinyl chloride formulation; and
(b) an acrylic copolymer comprising polymerized units derived from (i) 50 to 95 weight % of methyl methacrylate monomers, and (ii) 5 to 50 weight % of C₂-C₆ alkyl (meth)acrylate monomers, based on the total weight of monomers in the acrylic copolymer, wherein the acrylic copolymer is present in the thermoplastic composition in an amount of from 8 to 20 weight %, based on the total weight of the thermoplastic composition, and has a M*_{w}*/GPC-PS of 4 x 10⁶ g/mol or more, wherein M*_{w}*/GPC-PS refers to the weight average molecular weight as measured against polystyrene calibration standards via gel permeation chromatography with a refractive index detector following ASTM D5296-11 (2011), and using tetrahydrofuran as the mobile phase and diluent.

2. The oriented thermoplastic polymer composition of claim 1, wherein the polyvinyl chloride formulation comprises a polyvinyl chloride and a component selected from the group consisting of internal lubricants, external lubricants, stabilizers, inorganic fillers, and combinations of these.

3. The oriented thermoplastic polymer composition of claim 1, wherein the acrylic copolymer comprises polymerized units derived from (i) 55 to 85 weight % of methyl methacrylate monomers, and (ii) 15 to 45 weight % of C₂-C₆ alkyl (meth)acrylate monomers, based on the total weight of the monomers in the acrylic copolymer.

4. The oriented thermoplastic polymer composition of claim 1, wherein the acrylic copolymer comprises polymerized units derived from (i) 60 to 82 weight % of methyl methacrylate monomers, and (ii) 18 to 40 weight % of C₂-C₆ alkyl (meth)acrylate monomers, based on the total weight of the monomers in the acrylic copolymer.

5. The oriented thermoplastic polymer composition of claim 1, wherein the C₂-C₆ alkyl (meth)acrylate monomers are selected from the group consisting of butyl acrylate, butyl methacrylate, ethyl acrylate, and mixtures thereof.

6. The oriented thermoplastic polymer composition of claim 1, wherein the acrylic copolymer has a M*_{w}*/GPC-PS of 5 x 10⁶ g/mol or more, wherein Mw/GPC-PS refers to the weight average molecular weight as measured against polystyrene calibration standards via gel permeation chromatography with a refractive index detector following ASTM D5296-11 (2011), and using tetrahydrofuran as the mobile phase and diluent.

7. The oriented thermoplastic polymer composition of claim 1, wherein the acrylic copolymer has a M*_{w}*/GPC-PS of 6 x 10⁶ g/mol or more, wherein Mw/GPC-PS refers to the weight average molecular weight as measured against polystyrene calibration standards via gel permeation chromatography with a refractive index detector following ASTM D5296-11 (2011), and using tetrahydrofuran as the mobile phase and diluent.

8. The oriented thermoplastic polymer composition of claim 1, wherein:
the polyvinyl chloride formulation (a) comprises a polyvinyl chloride and a component selected from the group consisting of internal lubricants, external lubricants, stabilizers, inorganic fillers, and combinations thereof; and
the acrylic copolymer (b) comprises polymerized units derived from (i) 60 to 82 weight % of methyl methacrylate monomers, and (ii) 18 to 40 weight % of one or more monomers selected from the group consisting of butyl acrylate, butyl methacrylate, ethyl acrylate, and mixtures thereof, based on the total weight of monomers in the acrylic copolymer, wherein the acrylic copolymer has a M*_{w}*/GPC-PS of 5 x 10⁶ to 8 x 10⁶ g/mol, wherein Mw /GPC-PS refers to the weight average molecular weight as measured against polystyrene calibration standards via gel permeation chromatography with a refractive index detector following ASTM D5296-11 (2011), and using tetrahydrofuran as the mobile phase and diluent.

9. An article of manufacture comprising the thermoplastic polymer composition of claim 1, wherein the article of manufacture is a pipe.

10. An article of manufacture comprising the thermoplastic polymer composition of claim 8, wherein the article of manufacture is a pipe.

## Patentansprüche

1. Eine orientierte thermoplastische Polymerzusammensetzung, die Folgendes beinhaltet:
(a) eine Polyvinylchloridformulierung; und
(b) ein Acrylcopolymer, das polymerisierte Einheiten beinhaltet, die, bezogen auf das Gesamtgewicht der Monomere in dem Acrylcopolymer, (i) zu 50 bis 95 Gew.-% von Methylmethacrylatmonomeren und (ii) zu 5 bis 50 Gew.-% von C₂-C₆-Alkyl(meth)acrylatmonomeren abgeleitet sind, wobei das Acrylcopolymer in der thermoplastischen Zusammensetzung in einer Menge von 8 bis 20 Gew.-%, bezogen auf das Gesamtgewicht der thermoplastischen Zusammensetzung, vorhanden ist und ein M*_{w}*/GPC-PS von 4 x 10⁶ g/mol oder mehr aufweist, wobei sich M*_{w}*/GPC-PS auf das Gewichtsmittel des Molekulargewichts, wie es über Gelpermeationschromatographie mit einem R.I.-Detektor nach ASTM D5296-11 (2011) und unter Verwendung von Tetrahydrofuran als mobile Phase und Verdünnungsmittel gegen Polystyrolkalibrierungsstandards gemessen wird, bezieht.

2. Orientierte thermoplastische Polymerzusammensetzung gemäß Anspruch 1, wobei die Polyvinylchloridformulierung ein Polyvinylchlorid und eine Komponente, die aus der Gruppe ausgewählt ist, die aus internen Gleitmitteln, externen Gleitmitteln, Stabilisatoren, anorganischen Füllmaterialien und Kombinationen von diesen besteht, beinhaltet.

3. Orientierte thermoplastische Polymerzusammensetzung gemäß Anspruch 1, wobei das Acrylcopolymer polymerisierte Einheiten beinhaltet, die, bezogen auf das Gesamtgewicht der Monomere in dem Acrylcopolymer, (i) zu 55 bis 85 Gew.-% von Methylmethacrylatmonomeren und (ii) zu 15 bis 45 Gew.-% von C₂-C₆-Alkyl(meth)acrylatmonomeren abgeleitet sind.

4. Orientierte thermoplastische Polymerzusammensetzung gemäß Anspruch 1, wobei das Acrylcopolymer polymerisierte Einheiten beinhaltet, die, bezogen auf das Gesamtgewicht der Monomere in dem Acrylcopolymer, (i) zu 60 bis 82 Gew.-% von Methylmethacrylatmonomeren und (ii) zu 18 bis 40 Gew.-% von C₂-C₆-Alkyl(meth)acrylatmonomeren abgeleitet sind.

5. Orientierte thermoplastische Polymerzusammensetzung gemäß Anspruch 1, wobei die C₂-C₆-Alkyl(meth)acrylatmonomere aus der Gruppe ausgewählt sind, die aus Butylacrylat, Butylmethacrylat, Ethylacrylat und Mischungen davon besteht.

6. Orientierte thermoplastische Polymerzusammensetzung gemäß Anspruch 1, wobei das Acrylcopolymer ein M*_{w}*/GPC-PS von 5 x 10⁶ g/mol oder mehr aufweist, wobei sich Mw/GPC-PS auf das Gewichtsmittel des Molekulargewichts, wie es über Gelpermeationschromatographie mit einem R.I.-Detektor nach ASTM D5296-11 (2011) und unter Verwendung von Tetrahydrofuran als mobile Phase und Verdünnungsmittel gegen Polystyrolkalibrierungsstandards gemessen wird, bezieht.

7. Orientierte thermoplastische Polymerzusammensetzung gemäß Anspruch 1, wobei das Acrylcopolymer ein M*_{w}*/GPC-PS von 6 x 10⁶ g/mol oder mehr aufweist, wobei sich Mw/GPC-PS auf das Gewichtsmittel des Molekulargewichts, wie es über Gelpermeationschromatographie mit einem R.I.-Detektor nach ASTM D5296-11 (2011) und unter Verwendung von Tetrahydrofuran als mobile Phase und Verdünnungsmittel gegen Polystyrolkalibrierungsstandards gemessen wird, bezieht.

8. Orientierte thermoplastische Polymerzusammensetzung gemäß Anspruch 1, wobei:
die Polyvinylchloridformulierung (a) ein Polyvinylchlorid und eine Komponente, die aus der Gruppe ausgewählt ist, die aus internen Gleitmitteln, externen Gleitmitteln, Stabilisatoren, anorganischen Füllmaterialien und Kombinationen davon besteht, beinhaltet; und
das Acrylcopolymer (b) polymerisierte Einheiten beinhaltet, die, bezogen auf das Gesamtgewicht der Monomere in dem Acrylcopolymer, (i) zu 60 bis 82 Gew.-% von Methylmethacrylatmonomeren und (ii) zu 18 bis 40 Gew.-% von einem oder mehreren Monomeren, die aus der Gruppe ausgewählt sind, die aus Butylacrylat, Butylmethacrylat, Ethylacrylat und Mischungen davon besteht, abgeleitet sind, wobei das Acrylcopolymer ein M*_{w}*/GPC-PS von 5 x 10⁶ bis 8 x 10⁶ g/mol aufweist, wobei sich Mw/GPC-PS auf das Gewichtsmittel des Molekulargewichts, wie es über Gelpermeationschromatographie mit einem R.I.-Detektor nach ASTM D5296-11 (2011) und unter Verwendung von Tetrahydrofuran als mobile Phase und Verdünnungsmittel gegen Polystyrolkalibrierungsstandards gemessen wird, bezieht.

9. Ein Herstellungsartikel, der die thermoplastische Polymerzusammensetzung gemäß Anspruch 1 beinhaltet, wobei der Herstellungsartikel ein Rohr ist.

10. Ein Herstellungsartikel, der die thermoplastische Polymerzusammensetzung gemäß Anspruch 8 beinhaltet, wobei der Herstellungsartikel ein Rohr ist.

## Revendications

1. Une composition de polymère thermoplastique orienté comprenant :
(a) une formulation de polychlorure de vinyle ; et
(b) un copolymère acrylique comprenant des unités polymérisées dérivées (i) de 50 à 95 % en poids de monomères de méthacrylate de méthyle, et (ii) de 5 à 50 % en poids de monomères de (méth)acrylate d'alkyle en C₂ à C₆, rapporté au poids total de monomères dans le copolymère acrylique, dans laquelle le copolymère acrylique est présent dans la composition thermoplastique dans une quantité allant de 8 à 20 % en poids, rapporté au poids total de la composition thermoplastique, et a une M*_{w}*/GPC-PS de 4 x 10⁶ g/mol ou plus, dans laquelle M*_{w}*/GPC-PS fait référence à la masse moléculaire moyenne en poids telle que mesurée par rapport à des étalons de référence de polystyrène par le biais d'une chromatographie par perméation de gel avec un détecteur réfractométrique en suivant l'ASTM D5296-11 (2011), et en utilisant du tétrahydrofurane comme phase mobile et diluant.

2. La composition de polymère thermoplastique orienté de la revendication 1, dans laquelle la formulation de polychlorure de vinyle comprend un polychlorure de vinyle et un constituant sélectionné dans le groupe consistant en des lubrifiants internes, des lubrifiants externes, des stabilisants, des charges inorganiques, et des combinaisons de ces éléments.

3. La composition de polymère thermoplastique orienté de la revendication 1, dans laquelle le copolymère acrylique comprend des unités polymérisées dérivées (i) de 55 à 85 % en poids de monomères de méthacrylate de méthyle, et (ii) de 15 à 45 % en poids de monomères de (méth)acrylate d'alkyle en C₂ à C₆, rapporté au poids total des monomères dans le copolymère acrylique.

4. La composition de polymère thermoplastique orienté de la revendication 1, dans laquelle le copolymère acrylique comprend des unités polymérisées dérivées (i) de 60 à 82 % en poids de monomères de méthacrylate de méthyle, et (ii) de 18 à 40 % en poids de monomères de (méth)acrylate d'alkyle en C₂ à C₆, rapporté au poids total des monomères dans le copolymère acrylique.

5. La composition de polymère thermoplastique orienté de la revendication 1, dans laquelle les monomères de (méth)acrylate d'alkyle en C₂ à C₆ sont sélectionnés dans le groupe consistant en l'acrylate de butyle, le méthacrylate de butyle, l'acrylate d'éthyle, et des mélanges de ceux-ci.

6. La composition de polymère thermoplastique orienté de la revendication 1, dans laquelle le copolymère acrylique a une M*_{w}*/GPC-PS de 5 x 10⁶ g/mol ou plus, dans laquelle Mw/GPC-PS fait référence à la masse moléculaire moyenne en poids telle que mesurée par rapport à des étalons de référence de polystyrène par le biais d'une chromatographie par perméation de gel avec un détecteur réfractométrique en suivant l'ASTM D5296-11 (2011), et en utilisant du tétrahydrofurane comme phase mobile et diluant.

7. La composition de polymère thermoplastique orienté de la revendication 1, dans laquelle le copolymère acrylique a une M*_{w}*/GPC-PS de 6 x 10⁶ g/mol ou plus, dans laquelle Mw/GPC-PS fait référence à la masse moléculaire moyenne en poids telle que mesurée par rapport à des étalons de référence de polystyrène par le biais d'une chromatographie par perméation de gel avec un détecteur réfractométrique en suivant l'ASTM D5296-11 (2011), et en utilisant du tétrahydrofurane comme phase mobile et diluant.

8. La composition de polymère thermoplastique orienté de la revendication 1, dans laquelle :
la formulation de polychlorure de vinyle (a) comprend un polychlorure de vinyle et un constituant sélectionné dans le groupe consistant en des lubrifiants internes, des lubrifiants externes, des stabilisants, des charges inorganiques, et des combinaisons de ceux-ci ; et
le copolymère acrylique (b) comprend des unités polymérisées dérivées (i) de 60 à 82 % en poids de monomères de méthacrylate de méthyle, et (ii) de 18 à 40 % en poids d'un ou de plusieurs monomères sélectionnés dans le groupe consistant en l'acrylate de butyle, le méthacrylate de butyle, l'acrylate d'éthyle, et des mélanges de ceux-ci, rapporté au poids total de monomères dans le copolymère acrylique, dans laquelle le copolymère acrylique a une M*_{w}*/GPC-PS de 5 x 10⁶ à 8 x 10⁶ g/mol, dans laquelle Mw/GPC-PS fait référence à la masse moléculaire moyenne en poids telle que mesurée par rapport à des étalons de référence de polystyrène par le biais d'une chromatographie par perméation de gel avec un détecteur réfractométrique en suivant l'ASTM D5296-11 (2011), et en utilisant du tétrahydrofurane comme phase mobile et diluant.

9. Un article manufacturé comprenant la composition de polymère thermoplastique de la revendication 1, l'article manufacturé étant un tuyau.

10. Un article manufacturé comprenant la composition de polymère thermoplastique de la revendication 8, l'article manufacturé étant un tuyau.
